# EUROPEAN PATENT APPLICATION

(11) **EP 3 779 569 A1**
(43) Date of publication of application: **17.02.2021**
(21) Application number: 18914711.9
(22) Date of filing: 21.09.2018
(51) Int. Cl.: G02C 7/04, G02C 7/16

(54) **CONTACT LENS WORN ON ONE EYE TO IMPROVE PRESBYOPIA**

(30) Priority: 10.04.2018 KR 20180041717
(71) Applicant: Koryoeyetech Co., Ltd., Seoul 06093 (KR)
(72) Inventor: LEE, Chang Seon, Seoul 06072 (KR); MA, Ki Jung, Seoul 06636 (KR)
(74) Representative: AOMB Polska Sp. z.o.o.
(86) International application number: PCT/KR2018/011212
(87) International publication number: WO 2019/198889

(57) **Abstract**

Provided is a contact lens for presbyopia, the contact lens including a circular central transmissive portion (12) with a diameter of 1.5 mm to 1.8 mm in the center thereof which transmits light to be incident on an eye, an annular concentric blocking portion (14) with a uniform width which surrounds the circular central transmissive portion (12) and blocks light to be incident on the eye, an internal diameter of the annular concentric blocking portion (14) determining a magnitude and a shape of the circular central transmissive portion (12), an annular concentric peripheral transmissive portion (16) with a uniform width which surrounds the annular concentric blocking portion (14) and transmits light, and a concentric peripheral blocking portion (18) which surrounds the annular concentric peripheral transmissive portion (16) and blocks light to be incident on the eye, an internal diameter of the concentric peripheral blocking portion (18) determining a magnitude and a shape of the annular concentric peripheral transmissive portion (16).

## Description

### Technical Field

The present invention relates to a contact lens and, more particularly, to a presbyopia lens to be worn on one eye to overcome inconvenience attributable to presbyopia.

### Background Art

When the vertebrate eye changes its focus from a far object to a near object, the optical power thereof needs to be changed. To this end, a human crystalline lens within the eyeball adjusts the refractive power thereof because the thickness of the corona and the distance between the front and the rear of the eyeball are not variable. This adjustment of the human crystalline lens is known as accommodation.

Due to an aging process, the human crystalline lens is stiffened and elasticity thereof is reduced. This in turn deteriorates the accommodation of the human crystalline lens, resulting in inconvenience in doing near-distance tasks. Presbyopia is known to occur due to a reduction in elasticity of a ciliary body, which is a muscle that adjusts the reflective index of the human crystalline lens at both ends of the human crystalline lens, or a reduction in elasticity of the human crystalline lens, or due to hypertrophy of the human crystalline lens. A ciliary body and a human crystalline lens of a young human have excellent elasticity. That is, when looking at an object present at a very near distance, the ciliary body contracts, and the human crystalline lens is thickened. Thus, the refractive index of the human crystalline lens is increased, thereby forming a sharp image on a retina. However, due to the aging process, the elasticity of the human crystalline lens is decreased and hypertrophy thereof occurs. Because the refractive index of the human crystalline lens is not increased, an image of an object present at a long distance is formed sharply on the retina, but an image of an object present at a near distance is formed in a blurred manner on the retina.

In order to correct presbyopia, there are proposed two corrective methods: optical and surgical. Prevention and treatment of presbyopia have not been completely successful. However, to correct presbyopia, research has been made on methods of causing an eye to focus light on the retina when looking at a close object, including the optical and surgical corrective methods.

An example of the optical corrective method is to use a bifocal or multifocal contact lens. A central portion in the center of the bifocal or multifocal contact lens has a high refractive index or is formed with asymmetrical design. In a case where a central portion of a lens has a high refractive index, the more the edge of the lens is approached, the lower refractive index the lens has. For the asymmetrical design, diffraction optics for focusing light at different distances is used. Focal point distribution for an object present at a near distance or an object present at a long distance varies according to refraction design.

In addition, there are monovision contact lenses. In monovision, one eye is corrected with a monovision contact lens for nearsightedness, and the other eye is corrected with a monovision contact lens for farsightedness. The monovision contact lens provides clear vision for both nearsightedness and farsightedness. Generally, the monovision contact lens for farsightedness is prescribed for the better of the two eyes, and the monovision contact lens for nearsightedness is prescribed for the other one. As prescribed, they are worn on the eyes, respectively, for the two-week adaptation period. When they are not adaptable, conversely, the monovision contact lens for nearsightedness is prescribed for the better of the two eyes, and the monovision contact lens for farsightedness is prescribed for the other one. During the two-week adaptation period, a person with nearsightedness becomes accustomed to the monovision and learns to ignore an image that is out of focus on the retina.

However, the wearing of the monovision contact lens decreases vision and contrast sensitivity. In addition, the wearing of the monovision brings about problems, such as glare, double vision, halo, and temporary appearance of decreased distance vision, and may cause eyestrain and headaches.

### Documents of Related Art

### Patent Document

(Patent Document 1) Korean Patent Application Publication No. 10-2010-0050525 (May 13, 2010)
(Patent Document 2) Korean Utility Model Publication No. 20-2017-0002098 (Jun 14, 2017)

### Non-patent Document

(Non-patent Document 1): "Pupil Magnitude in the Normal Korean Population According to Age and Illuminance", Journal of The Korean Ophthalmological Society Vol.52 No.4 (2011): 401-406

### Disclosure

### Technical Problem

The present invention has been made in view of the problems occurring in the related art and an objective of the present invention is to provide a presbyopia contact lens that selectively blocks light to be incident on an eye to increase the focal distance so that an image comes into focus on the retina, thereby being capable of solving vision problems caused by presbyopia.

### Technical Solution

In order to accomplish the objective, one aspect of the present invention is to provide a contact lens for presbyopia, the contact lens including: a circular central transmissive portion (12) with a diameter of 1.5 mm to 1.8 mm in the center thereof which transmits light to be incident on an eye; an annular concentric blocking portion (14) with a uniform width which surrounds the circular central transmissive portion (12) and blocks light to be incident on the eye, in which an internal diameter of the annular concentric blocking portion (14) determines a magnitude and a shape of the circular central transmissive portion (12); an annular concentric peripheral transmissive portion (16) with a uniform width which surrounds the annular concentric blocking portion (14) and transmits light; and a concentric peripheral blocking portion (18) which surrounds the annular concentric peripheral transmissive portion (16) and blocks light to be incident on the eye, in which an internal diameter of the concentric peripheral blocking portion (18) determines a magnitude and a shape of the annular concentric peripheral transmissive portion (16).

### Advantageous Effects

A circular central transmissive portion and an annular concentric blocking portion block of a contact lens according to the present invention selectively block light that is to be incident on an eye, thereby increasing the focal distance so that an image comes into focus on the retina. Furthermore, an annular concentric peripheral transmissive portion and a concentric peripheral blocking portion effectively prevent a shortage of light that occurs due to the annular concentric blocking portion and an environment where an image in the shape of a doughnut is formed on the retina. Consequently, the circular central transmissive portion, the annular concentric blocking portion block, the annular concentric peripheral transmissive portion, and the concentric peripheral blocking portion serve their respective structural functions in conjunction with each other. This helps to clearly identify an object, thereby eliminating vision problems caused by presbyopia.

### Description of Drawings

FIG. 1 is a view illustrating an example where a contact lens according to the present invention is worn on an eyeball;
FIG. 2 is a plan view illustrating a structure of the contact lens according to the present invention;
FIG. 3 is a cross-sectional view illustrating the structure of the contact lens according to the present invention; and
FIG. 4 is a graph showing a result of measuring a magnitude of a pupil that varies with a change in illuminance.

### Best Mode

According to the present invention, in order to overcome presbyopia, a contact lens has a concentric portion that transmits light to be incident on an eye, in a concentrated manner. Thus, a pathway along which light is incident on the eye is narrowed, and an amount of incident light is reduced. Accordingly, one or several of the various images formed at positions on a retina are caused to disappear, and a depth of focus is increased.

A contact lens according to the prevention includes a circular central transmissive portion (12) with a diameter of 1.5 mm to 1.8 mm in the center thereof which transmits light to be incident on an eye, an annular concentric blocking portion (14) with a uniform width which surrounds the circular central transmissive portion (12) and blocks light to be incident on the eye, an internal diameter of the annular concentric blocking portion (14) determining a magnitude and a shape of the circular central transmissive portion (12), an annular concentric peripheral transmissive portion (16) with a uniform width which surrounds the annular concentric blocking portion (14) and transmits light, and a concentric peripheral blocking portion (18) which surrounds the annular concentric peripheral transmissive portion (16) and blocks light to be incident on the eye, an internal diameter of the concentric peripheral blocking portion (18) determining a magnitude and a shape of the annular concentric peripheral transmissive portion (16).

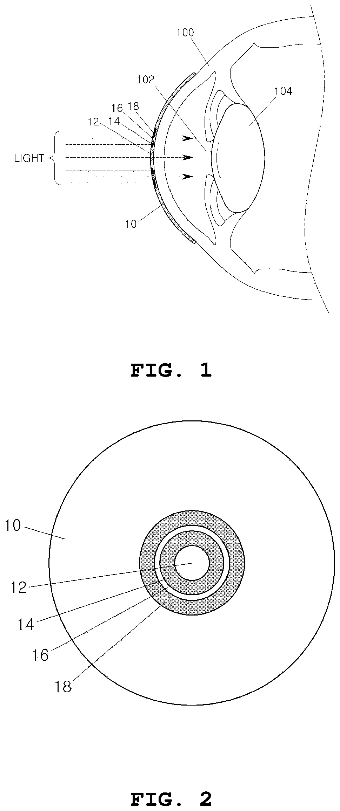

The present invention will be described in detail below with reference to FIGS. 1 to 4.

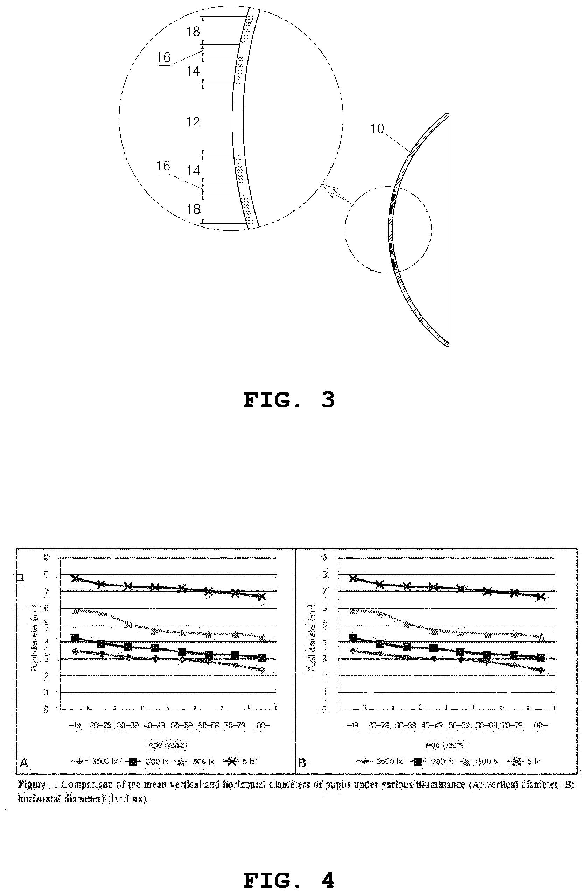

FIG. 1 is a view illustrating an example where the contact lens according to the present invention is worn on an eyeball. FIG. 2 is a plan view illustrating a structure of the contact lens according to the present invention. FIG. 3 is a cross-sectional view illustrating the structure of the contact lens according to the present invention. FIG. 4 is a graph showing a result of measuring a magnitude of a pupil that varies with a change in illuminance.

As illustrated in FIG. 1, a human eye 100 includes a cornea, a human crystalline lens 104 within an eyeball positioned behind the cornea, and a retina (not illustrated) that is the innermost layer of tissue of the human eye 100. The cornea is a primary focal-point forming element of the human eye 100, and the human crystalline lens 104 is a second focal-point forming element of the human eye 100. The retina includes photoreceptor cells that are primarily responsible for vision. A signal is received in a high-resolution area, called a macula, and is transferred to a visual center of a brain through an optic nerve.

In the human eye 100, light that is incident through the cornea is refracted while passing through the human crystalline lens 104 and a focal point is formed on a surface of the retina. Thus, visual perception is created. When the human crystalline lens 104 does not contract smoothly, presbyopia occurs. In this case, among various light rays on the cornea through various pathways, one or several light rays are out of focus on a surface of the retina. Thus, a presbyopia phenomenon where an object is seen in a blurred manner, and so on occur.

A contact lens 10 according to the present invention includes a circular central transmissive portion 12 in the center thereof, and an annular concentric blocking portion 14 outside the circular central transmissive portion 12. The contact lens 10 is formed to be transparent, but the annular concentric blocking portion 14 is made to be opaque. The opaque annular concentric blocking portion 14 surrounds the circular central transmissive portion 12. That is, the annular concentric blocking portion 14 is formed to a uniform width to surround the circular central transmissive portion 12. When the contact lens 10 is tinted, the annular concentric blocking portion 14 is made to be opaque. Thus, the annular concentric blocking portion 14 blocks light that is to be incident on the eye. The circular central transmissive portion 12 is positioned inside the annular concentric blocking portion 14. The internal diameter of the annular concentric blocking portion 14 determines the magnitude and the shape of the circular central transmissive portion 12.

Light that is to pass through the contact lens 10 and then the cornea and to be incident on the human crystalline lens 104 is selectively blocked. Among light rays incident on the annular concentric blocking portion 14, light rays incident along a pathway that does not provide a focal point on the retina are blocked. Accordingly, a depth of focus in which light is focused on the retina is increased.

The circular central transmissive portion 12 that is formed, according to a given magnitude, in the center of the contact lens 10 transmits light that is to be incident on the eye. The circular central transmissive portion12 serves to reduce a magnitude of the pupil. Thus, the circular central transmissive portion 12 reduces an amount of light that is incident, at various angles, on the cornea, and allows light to pass through only in a specific direction. That is, light rays incident on the cornea at various angles from an object create images of the object at positions on the retina. At this time, a decrease in an angle at which light is incident on the circular central transmissive portion 12 causes the pinhole effect of narrowing a pathway along which light is incident on the eye and thus reducing an amount of incident light. As a result, one or several of the various images formed at positions on the retina disappear, thereby increasing the depth of focus.

The smaller the magnitude of the circular central transmissive portion 12, the more the depth of focus increases. However, the circular central transmissive portion 12 having a too-small magnitude is not only unsuitable for a magnitude of an adult's pupil, but also causes the pupil to be enlarged when an amount of incident light is small. Because of this, a doughnut phenomenon appears where an image in the shape of a doughnut is formed on the retina. Conversely, the circular central transmissive portion 12 having a too-great magnitude decreases the pinhole effect. This makes it to impossible to adjust the depth of focus. Therefore, the magnitude of the circular central transmissive portion 12 is determined considering a magnitude of an ordinary adult's pupil. However, the magnitude thereof is determined in a range where the magnitude of the pupil can be decreased. That is, the circular central transmissive portion 12 has a smaller magnitude than an anterior cavity 102 positioned in front of the human crystalline lens 104. Preferably, the circular central transmissive portion 12 takes the shape of a circle with a diameter of 1.5 mm to 1.8 mm.

In a case where a lower limit of 1.5 mm is reached, as described above, an image in the shape of a doughnut is formed on the retina. This causes inconvenience to a wearer of a contact lens. The upper limit is determined considering an adult's eye structure.

As illustrated in FIG. 4, the research shows that an average magnitude of pupils of adults in their thirties or older is approximately 2 mm to 5 mm both at an illuminance of approximately 3500 lux that is a measure of the illuminance of light in a daylight environment and at an illuminance of approximately 500 lux that is a measure of the illuminance of light in a lighted indoor environment (refer to Non-patent Document). Therefore, in a case where the magnitude of the circular central transmissive portion 12 exceeds 2 mm, when a change in a position of the worn contact lens 10 occurs slightly, an edge thereof and the pupil are not in an optical straight line of sight of an object. Thus, the pinhole effect is decreased. Particularly, in most cases, the pupil is not positioned at the center of the human eye and this is attributable to characteristics of the human eye. Thus, when the contact lens 10 according to the present invention is worn on the eye, the pupil and the circular central transmissive portion 12 may not be concentric. Therefore, the diameter of the circular central transmissive portion 12 should not exceed 2 mm. Furthermore, when the contact lens 10 is worn on the eye, even if the change in the position occurs to a degree, the pinhole effect should be achieved without difficulty. To that end, preferably, the diameter thereof does not exceed 1.8 mm.

The internal diameter of the annular concentric blocking portion 14 determines the shape of the circular central transmissive portion 12. The internal diameter of the annular concentric blocking portion 14 is a diameter of the circular central transmissive portion 12 positioned inside the annular concentric blocking portion 14. The formation of the circular central transmissive portion 12 makes distances from all points in an edge of the circular central transmissive portion 12 to the center thereof the same. Incident light rays effectively converge at one focal point.

In a case where the circular central transmissive portion 12 is formed to the magnitude and the shape described above, the annular concentric blocking portion 14 has a greater magnitude than the anterior cavity 102 positioned in front of the human crystalline lens 104. Thus, light incident along a pathway that does not provide a focal point on the retina is effectively blocked. To that end, the annular concentric blocking portion 14 is formed to a width of 0.6 mm to 0.8mm. Thus, the annular concentric blocking portion 14 has a larger width than the anterior cavity 102 positioned in front of the human crystalline lens 104, and an annular concentric peripheral transmissive portion 16 that will be described below properly serves its structural function.

According to the present invention, the annular concentric peripheral transmissive portion 16 and a concentric peripheral blocking portion 18 are sequentially positioned outside the annular concentric blocking portion 14. The concentric peripheral blocking portion 18 has an internal diameter that is greater than an external diameter of the annular concentric blocking portion 14. Thus, the annular concentric peripheral transmissive portion 16 is naturally positioned between the concentric peripheral blocking portion 18 and the annular concentric blocking portion 14.

The annular concentric peripheral transmissive portion 16 serves to increase an amount of incident light on the human eye 100. In a case where the annular concentric blocking portion 14 completely blocks light, a phenomenon where the amount of incident light on the human eye 100 is decreased and where a field of view thus appears dark occurs. Accordingly, the doughnut phenomenon described above occurs according to the shape of the annular concentric blocking portion 14. However, since the annular concentric peripheral transmissive portion 16 is formed as described above, the amount of incident light is increased and thus decreases the doughnut phenomenon. As a result, a field of view appears bright. The concentric peripheral blocking portion 18 serves to block light in such a manner that an amount of incident light on the annular concentric peripheral transmissive portion 16 is not excessive.

The shape of the annular concentric peripheral transmissive portion 16 is determined by an external diameter of the annular concentric blocking portion 14 and an internal diameter of the concentric peripheral blocking portion 18. Preferably, the annular concentric peripheral transmissive portion 16 takes the shape of a ring with a uniform width. Furthermore, the annular concentric peripheral transmissive portion 16 in this shape has a smaller width than the annular concentric blocking portion 14. The reason for this is that, in a case where the annular concentric peripheral transmissive portion 16 has a larger width than the annular concentric blocking portion 14, the annular concentric blocking portion 14 does not properly serve to block light. Preferably, the annular concentric peripheral transmissive portion 16 has a width of 0.4 mm to 0.55 mm. The reason for this is that, in a case where the depth thereof falls out of this range, the doughnut phenomenon is not properly decreased.

The annular concentric blocking portion 14 takes the shape of a ring, and the concentric peripheral blocking portion 18 takes the shape of a ring with a uniform width. Thus, the annular concentric peripheral transmissive portion 16 is concentrically formed therebetween. In this case, only an internal circumferential edge of the concentric peripheral blocking portion 18 may take the shape of a ring.

The concentric peripheral blocking portion 18 has an external diameter smaller than a diameter of the contact lens 10. The concentric peripheral blocking portion 18 has a three to four times larger width than the annular concentric peripheral transmissive portion 16. The reason for this is that light rays concentrate into the annular concentric peripheral transmissive portion 16 and that necessary light is effectively blocked. An external circumferential edge of the concentric peripheral blocking portion 18 may take a shape other than the shape of a circle, such as the shape of a waveform, whenever necessary. Thus, the impression that a pattern is formed on the contact lens 10 can be created. In this manner, the contact lens 10 may vary in appearance, and an aesthetic value thereof can be improved.

The contact lens 10 according to the present invention, which is described above, is worn on one eye. In a case where two contact lenses 10 are worn on both eyes, respectively, when the contact lens 10 moves excessively, a situation where fields of views of both eyes are blocked may occur unexpectedly. For this reason, the contact lens 10 is worn on only one eye.

As described above, the circular central transmissive portion 12 and the annular concentric blocking portion 14 of the contact lens 10 according to the present invention selectively blocks light that is to be incident on an eye, and thus a depth of focus for an image to be formed on the retina is increased. A shortage of light that occurs due to the annular concentric blocking portion block and a phenomenon where an image in the shape of a doughnut is formed on the retina can be effectively prevented with the annular concentric peripheral transmissive portion 16 and the concentric peripheral blocking portion 18 that serve their respective structural functions in conjunction with the circular central transmissive portion 12 and the annular concentric blocking portion 14. Consequently, the circular central transmissive portion 12, the annular concentric blocking portion 14, the annular concentric peripheral transmissive portion 16, and the concentric peripheral blocking portion 18 serve their respective structural functions very in conjunction with each other. This helps to clearly identify an object and thus to overcome presbyopia. An advantage of overcoming presbyopia will be described below with reference to the results of the experiment for comparing examples of implementing the contact lens 10 according to the present invention with comparative examples.

### Implementation Example 1

The circular central transmissive portion 12 is formed in the center of the contact lens 10, and the annular concentric blocking portion 14, the annular concentric peripheral transmissive portion 16, and the concentric peripheral blocking portion 18 were formed in the form of a ring in a manner that is concentric with the circular central transmissive portion 12. The circular central transmissive portion 10 was formed to have a diameter of 1.66 mm. The annular concentric blocking portion 14 was formed to have a width of 0.71 mm. The annular concentric peripheral transmissive portion 16 was formed to have a width of 0.48 mm. The concentric peripheral blocking portion 18 was formed to have a width of 2.13 mm.

### Comparative Example 1

In Implementation Example 1, the circular central transmissive portion 10 was formed to have a diameter of 1.3 mm.

### Comparative Example 2

In Implementation Example 1, the circular central transmissive portion 10 was formed to have a diameter of 2.0 mm.

### Comparative Example 3

In Implementation Example 1, the annular concentric blocking portion 12 was formed to have a width of 0.4 mm.

### Comparative Example 4

In Implementation Example 1, the annular concentric blocking portion 12 was formed to have a width of 1 mm.

### Comparative Example 5

In Implementation Example 1, the annular concentric peripheral transmissive portion 16 was formed to have a width of 0.2 mm.

### Comparative Example 6

In Implementation Example 1, the annular concentric peripheral transmissive portion 16 was formed to have a diameter of 0.65 mm.

### Experiment Example 1

20 male and female patients with presbyopia in their 40s to 70s were selected as patients who, for experiment, wear contact lenses in Implementation Example 1 and Comparative Examples 1 to 6. Results of the patients wearing the contact lenses were measured. In the experiment (near vision measurement), the patient who worn the contact lens on his/her one eye read a picture and a character drawn on a chart placed in the upright position by a distance of 40 cm away from his/her one eye at an illuminance of 500 lux in an indoor environment. Visibility was measured on a 5-grade scale ranging from lowest to highest, and average visibility was calculated. It was checked whether or not the doughnut phenomenon occurs. The following results were obtained.

**Table 1**

| | Visibil ity (Levels 1 to 5) | Doughnut Phenomenon (Occurrence or Non-occurrence) |
|---|---|---|
| Implementation Example 1 | 5 | Non-occurrence |
| Comparative Example 1 | 4 | Occurrence |
| Comparative Example 2 | 3 | Non-occurrence |
| Comparative Example 3 | 3 | Non-occurrence |
| Comparative Example 4 | 4 | Occurrence |
| Comparative Example 5 | 3 | Occurrence |
| Comparative Example 6 | 3 | Occurrence |

From Table 1, it can be seen that, with the contact lens in Implementation Example 1 according to a preferable embodiment of the present invention, visibility is improved and the doughnut phenomenon does not occur, thereby achieving the effect of overcoming presbyopia. Furthermore, it can be seen that, with the contact lens in Comparative Examples 1 to 6, in a case where visibility is decreased due to the occurrence of the doughnut phenomenon (in Comparative Examples 1, 4, 5, and 6) and where the doughnut phenomenon does not occur, an amount of light is insufficient, resulting in the visibility being lower than that in Implementation Example 1. Consequently, it can be seen that Implementation Example 1 is most effective in overcoming presbyopia.

### <Description of the Reference Numerals in the Drawings>

10: Contact Lens, 12: Circular Central Transmissive Portion
14: Annular Concentric Blocking Portion, 16: Annular Concentric Peripheral Transmissive Portion
18: Concentric Peripheral Blocking Portion,
100: Eye, 102: Anterior Cavity
104: Human Crystalline Lens

## Claims

1. A contact lens for presbyopia, comprising:
a circular central transmissive portion (12) with a diameter of 1.5 mm to 1.8 mm in the center thereof which transmits light to be incident on an eye;
an annular concentric blocking portion (14) with a uniform width which surrounds the circular central transmissive portion (12) and blocks light to be incident on the eye, an internal diameter of the annular concentric blocking portion (14) determining a magnitude and a shape of the circular central transmissive portion (12) ;
an annular concentric peripheral transmissive portion (16) with a uniform width which surrounds the annular concentric blocking portion (14) and transmits light; and
a concentric peripheral blocking portion (18) which surrounds the annular concentric peripheral transmissive portion (16) and blocks light to be incident on the eye, an internal diameter of the concentric peripheral blocking portion (18) determining a magnitude and a shape of the annular concentric peripheral transmissive portion (16).

2. The contact lens according to claim 1, wherein the annular concentric peripheral transmissive portion (18) is concentric with the annular concentric blocking portion (14).

3. The contact lens according to claim 2, wherein the annular concentric peripheral transmissive portion (16) has a smaller width than the annular concentric blocking portion (14).

4. The contact lens according to claim 3, wherein the annular concentric blocking portion (14) has a width of 0.6 mm to 0.8 mm, and the annular concentric peripheral transmissive portion (16) has a width of 0.4 mm to 0.55 mm.
